# EUROPÄISCHE PATENTSCHRIFT

(11) **EP 3 071 928 B1**
(45) Veröffentlichungstag und Bekanntmachung des Hinweises auf die Patenterteilung: **06.09.2017**
(21) Anmeldenummer: 14702770.0
(22) Anmeldetag: 20.01.2014
(51) Int. Cl.: G01B 11/25

(54) **BILDAUFNAHMESIMULATION IN EINEM KOORDINATENMESSGERÄT**
IMAGE CAPTURING SIMULATION IN A COORDINATE MEASURING APPARATUS
SIMULATION D'ENREGISTREMENT D'IMAGE DANS UN DISPOSITIF DE MESURE DE COORDONNÉES

(43) Veröffentlichungstag der Anmeldung: 28.09.2016
(73) Patentinhaber: Carl Zeiss Industrielle Messtechnik GmbH, 73447 Oberkochen (DE)
(72) Erfinder: ENGEL, Thomas, 73432 Aalen (DE); HAVERKAMP, Nils, 73431 Aalen (DE); WICK, Michael, 73431 Aalen (DE); FRASCH, Hans-Joachim, 73431 Aalen (DE)
(74) Vertreter: Witte, Weller & Partner Patentanwälte mbB
(86) Internationale Anmeldenummer: PCT/EP2014/051050
(87) Internationale Veröffentlichungsnummer: WO 2015/106829

(56) Entgegenhaltungen:
- EP-A1- 2 281 666
- EP-A2- 1 026 637
- WO-A2-02/44650
- DE-A1-102011 104 357

## Beschreibung

Die vorliegende Erfindung betrifft ein Verfahren zur Simulation einer Abbildung auf einen optischen Sensor eines Koordinatenmessgeräts zum Inspizieren eines Messobjekts. Des Weiteren betrifft die vorliegende Erfindung ein Verfahren zur Optimierung einer Beleuchtung eines Messobjekts in einem Koordinatenmessgerät mit einem optischen Sensor.

Koordinatenmessgeräte als solche sind allgemein bekannt. Sie dienen in industriellen Anwendungen beispielsweise der Qualitätssicherung oder dem Vermessen von Bauteilen in Retro-Fit-Prozessen oder anderen Anwendungen. Mittels der Koordinatenmessgeräte werden Geometrien und Dimensionen von Bauteilen dafür hochgenau vermessen. Zur Bestimmung der Koordinaten der Bauteile können verschiedene Messverfahren eingesetzt werden, die sich grundsätzlich in sogenannte taktile Messverfahren und optische Messverfahren unterscheiden.

Taktile Messverfahren tasten während des Messvorgangs das Bauteil mittels eines Tastelements an. Beispielsweise handelt es sich bei dem Tastelement um eine an einem Ende eines Taststifts angebrachte Tastkugel. Der Taststift mit der Tastkugel kann üblicherweise mittels eines Strukturaufbaus innerhalb eines Messraums in beliebiger Orientierung angeordnet und ausgerichtet werden. Hierfür sind beispielsweise Portalaufbauten, Horizontalarmaufbauten oder Tischaufbauten bekannt.

Optische Messverfahren arbeiten berührungslos, d.h. das zu vermessende Bauteil, das Messobjekt, wird mittels eines optischen Sensors, beispielsweise einer Kamera, aufgenommen und die so gewonnenen Bilddaten werden ausgewertet. Es sind eine Vielzahl optischer Messverfahren bekannt, die sich nicht nur in der Art und Weise der Bildaufnahme, sondern auch in der Art und Weise der Beleuchtungsanordnung unterscheiden. Beispielsweise sind Deflektrometrieverfahren, interferometrische Verfahren oder chromatische Verfahren, wie beispielsweise das Weißlichtsensor-Verfahren, bekannt. Einher mit den optischen Messverfahren geht oftmals eine elektronische Bildbearbeitung und -auswertung, um die gewünschten Daten aus den Bildaufnahmen zu extrahieren. Auch optische Sensoren können innerhalb eines Messraums frei bewegbar und orientierbar mittels eines Strukturaufbaus wie eines Portalaufbaus, Horizontalarmaufbaus oder eines Tischaufbaus angeordnet sein.

Alle voranstehend genannten Arten von Koordinatenmessgeräten und Messverfahren sind lediglich beispielhaft zu verstehen und dienen der Einführung in das technische Gebiet der vorliegenden Erfindung. Die vorliegende Erfindung beschäftigt sich mit Koordinatenmessgeräten, die optische Sensoren einsetzen.

Bei derartigen Koordinatenmessgeräten mit optischen Sensoren spielt die Beleuchtung eines Messobjekts eine große Rolle für die Genauigkeit und damit die Qualität der Messung. In der Regel ist man bestrebt, über den gesamten Bereich der Bildaufnahme eine homogene Ausleuchtung von passender Helligkeit zu erreichen, um alle Details des Messobjekts mit möglichst großem Kontrast erfassen zu können. Die Helligkeitsbereiche, die als passend angesehen werden können, hängen dabei von der Art des optischen Sensors und den dort verarbeitbaren Helligkeitsbereichen ab.

Die Einstellung der Beleuchtung erfordert jedoch in der Praxis ein hohes Maß an Erfahrung beim Bedienpersonal des Koordinatenmessgeräts oder aber ist sehr zeitaufwendig, da ggf. zunächst ein oder mehrere Messdurchläufe mit schlechter Beleuchtung durchgeführt werden, um sich iterativ der besten Beleuchtung anzunähern. Folglich muss die Bedienperson also mehrere Versuche bis zu einer passenden Beleuchtung durchführen, die dann erst brauchbare Messergebnisse liefert. Generell ist man daher bestrebt, die erforderlichen Vorkenntnisse und den Zeitaufwand für das Einstellen einer optimalen Beleuchtung zu minimieren.

Die Druckschrift DE 10 2009 025 334 A1 zeigt ein Verfahren zum Ermitteln eines idealen Erscheinungsbildes lackierter Oberflächen von Bauteilen wie Karosseriebauteilen. Es wird vorgeschlagen, dass mit einem mehrschichtigen Lack zu versehene Bauteile fotografiert und ihr optischer Eindruck nach einem hypothetischen Lackieren mittels eines Render-Programms berechnet und dargestellt wird. Es soll dann eine Auswertung dahingehend erfolgen, ob dieser berechnete optische Eindruck als schön oder nicht schön eingestuft wird. Basierend auf dieser Auswertung sollen dann Parameter der aufzutragenden Lackierung abgeändert und über ggf. vorzunehmende Neuberechnungen ausgewertet werden, bis der optische Eindruck als "schön" eingestuft wird.

Die Druckschrift WO 02/44650 A2 zeigt ein Verfahren und eine Vorrichtung zum Simulieren der Messung eines Werkstücks ohne Nutzung eines physischen Messsystems.

Die Druckschrift EP 2 281 666 A1 zeigt ein Simulationsverfahren und eine Simulationsvorrichtung zur Vermessung eines Bauteils und Optimierung der realen entsprechenden Vermessung. Dabei folgt ein Einrichten einer virtuellen Messsituation mit einem virtuellen Modell der Erfassungseinrichtung und einem virtuellen Modell des Merkmals, ein virtuelles Vermessen des Merkmalsmodells mit dem Erfassungseinrichtungsmodell, das Einrichten einer Messsituation mit einer Erfassungseinrichtung und dem Bauteil, und das Vermessen des Merkmals mit der Erfassungseinrichtung.

Die Druckschrift EP 1 026 637 A2 zeigt ein Hardwaresimulationssystem und ein Verfahren. Simulierte Bilder emulieren den Blick eines Blickinspektionssystems. Graphische Modelle von Objekten in einer virtuellen Welt und Linseneffektmodelle werden genutzt, um simulierte Bilder bereitzustellen.

Die Druckschrift DE 10 2011 104 357 A1 zeigt ein Verfahren zur Simulation eines Luftbildes. Dabei wird ein Verfahren zur Simulation eines Luftbildes bereitgestellt, welches durch Abbildung eines Objekts unter Verwendung einer Abbildungsoptik erzeugt wird.

Es ist eine Aufgabe der vorliegenden Erfindung, eine Möglichkeit anzugeben, die Einstellung einer Beleuchtung in einem Koordinatenmessgerät mit optischem Sensor zu vereinfachen.

Gemäß einem ersten Aspekt der Erfindung wird daher ein Verfahren gemäß Anspruch 1 zur Simulation einer Bildaufnahme eines optischen Sensors eines Koordinatenmessgeräts zum Inspizieren eines Messobjekts bereitgestellt, mit den folgenden Schritten:
- Bereitstellen eines ersten Datensatzes, der ein Modell des Messobjekts repräsentiert, eines zweiten Datensatzes, der ein Modell einer Beleuchtung des Messobjekts repräsentiert, und eines dritten Datensatzes, der ein Modell einer Optik des optischen Sensors repräsentiert, und
- Rendern eines Bildstapels basierend auf dem ersten Datensatz, dem zweiten Datensatz und dem dritte Datensatz, wobei der Bildstapel eine Mehrzahl von virtuellen Bildern zumindest eines Teilbereichs des Messobjekts aufweist wobei jedes virtuelle Bild zumindest mit einem anderen zweiten und/oder anderen dritten Datensatz gerendert ist, wobei mit dem optischen Sensor ein reales Bild des Messobjekts aufgenommen wird, dass nach dem Schritt des Renderns das reale Bild durch Korrelation mit den virtuellen Bildern des Bildstapels in den Bildstapel eingepasst wird, und dass Abweichungen zwischen dem realen Bild und einem entsprechenden virtuellen Bild des Bildstapels ermittelt werden.

Auf diese Weise wird es ermöglicht, mit den Methoden des Rendering anhand der in der Messtechnik aus CAD-Daten bekannten Objekteigenschaften eine vollständige Simulation der Bildaufnahme eines Objekts oder Objektbereichs vorzunehmen. Diese Messung kann mit einer oder mehrerer realer Messungen, wie im Folgenden noch erläutert wird, abgestützt werden.

Die Methoden des Rendering an sich sind bekannt. Der Begriff des "Renderns" ist geläufig und eine entsprechende Implementierung mittels frei am Markt erhältlicher Produkte möglich. Für die theoretischen Grundlagen kann beispielsweise auf das Buch "Physically Based Rendering - from Theory to Implementation" von Matt Pharr und Greg Humphreys, 2. Auflage, Morgan Kaufmann Publishers, 2010 verwiesen werden.

Bezüglich der in der vorliegenden Anmeldung Erwähnung findenden Implementierung von Objektiven bzw. Optiken von optischen Sensoren kann des Weiteren auf den Fachartikel von Kolb, Mitchell und Hanrahan "A Realistic Camera Model for Computer Graphics", Computer Graphics ("Proceedings of SIGGRAPH" 95), ACM SIGGRAPH, 1995, Seiten 317 bis 324 verwiesen werden.

Des Weiteren kann bezüglich der Wellenfrontbehandlung bzw. des sogenannten "Phase-Retrieval" auf den Fachartikel "Phase-Retrieval Algorithms for a Complicated Optical System" von J. R. Fienup, Applied Optics, Volume 32, No. 10, 1993, Seiten 1737 bis 1746 verwiesen werden.

In einem ersten Schritt werden somit ein erster Datensatz, der ein Modell des Messobjekts repräsentiert, ein zweiter Datensatz, der ein Modell einer Beleuchtung des Messobjekts repräsentiert, und ein dritter Datensatz, der ein Modell einer Optik des optischen Sensors repräsentiert, bereitgestellt. Diese drei Datensätze enthalten die wesentlichen Parameter zur Simulation der Abbildung auf den optischen Sensor des Koordinatenmessgeräts, die für das Rendern benötigt werden. Der erste Datensatz kann dabei beispielsweise in Form eines CAD (Computer Aided Design)-Datensatzes des Messobjekts bereitgestellt werden. Der das Modell einer Optik oder eines Objektivs des optischen Sensors repräsentierende dritte Datensatz kann beispielsweise in Form von Angaben über die Lage und Beschaffenheit der verwendeten Linsen und/oder Spiegelelemente des Objektivs, der Lage und Position des optischen Sensors und weiterer, die optische Abbildungsstrecke beeinflussender Größen bereitgestellt werden. Beispielsweise ist eine übliche tabellarische Angabe von Krümmungsradien, Abständen zwischen den einzelnen Flächen und verwendeten Materialien mit Brechungsindex und Abbe-Zahl möglich, wie in dem Artikel von Kolb et al. vorgeschlagen wird. Der die Beleuchtung des Koordinatenmessgeräts beschreibende zweite Datensatz kann beispielsweise durch Ort und Beschaffenheit der Lichtquellen, ihre Abstrahlwinkel, Lichtintensitätsverläufe usw. bereitgestellt werden. Im Schritt des Renderns wird es so möglich, ein virtuelles, auf den optischen Sensor des Koordinatenmessgeräts abgebildetes Bild des Messobjekts bei vorgegebener Beleuchtung zu berechnen.

Des Weiteren kann zusätzlich ein vierter Datensatz bereitgestellt sein, der ein Modell einer Umsetzung des auf den optischen Sensor einfallenden Photonenstroms bzw. Lichts in elektrische Signale repräsentiert, wobei die elektrischen Signale insbesondere grafisch darstellbare, rechnergestützt verarbeitbare und speicherbare elektrische Signale sind. Mittels eines vierten Datensatzes kann somit über die optische Abbildung hinaus die Verarbeitung des Messsignals berücksichtigt werden. Beispielsweise ist es auf diese Weise möglich, eine Pixelierung des optischen Sensors, eine Wellenabhängigkeit der Empfindlichkeit des optischen Sensors und andere, die Übertragungsstrecke zwischen der optischen Abbildung und dem elektrischen Signal beeinflussende Größen zu berücksichtigen.

Der Begriff "optischer Sensor" bezeichnet eine Einheit zur ortsaufgelösten und/oder richtungsaufgelösten Erfassung des von dem beleuchteten Messobjekt ausgehenden Photonenstroms.

Des Weiteren wird es möglich, einen Bildstapel zu berechnen. Ein solcher "Bildstapel" ist ein Satz mehrerer Bilder desselben Messobjekts oder desselben Teilbereichs eines Messobjekts, die bei unterschiedlichen Parametersätzen für zumindest einen von dem zweiten Datensatz, dem dritten Datensatz und dem vierten Datensatz berechnet werden. Beispielsweise kann als Parameter eine Lage einer Fokusebene dabei durch Ändern der Fokuseinstellung des Objektivs und/oder durch Ändern des Abstands zwischen Objektiv und Messobjekt verändert werden.

Auf diese Weise wird es ermöglicht, eine Mehrzahl jeweils von Bildaufnahmen mit jeweils unterschiedlichen Parametern der Bildaufnahme zu errechnen. Wenn lediglich eine Variation von Ortsparametern vorgenommen wird, kann sich dieser Bildstapel erstreckt beispielsweise entlang der optischen Achse des Objektivs erstrecken, wobei die Bilder jeweils senkrecht zu der optischen Achse liegen, sofern keine Bildebenenverkippungen vorgesehen sind, beispielsweise zur Einhaltung der Scheimpflug-Bedingung. Es kann aber alternativ oder kumulativ beispielsweise auch eine Variation von Parametern der Beleuchtung, Parametern der Positionierung von optischem Sensor relativ zu dem Messobjekt, der Größe und Lage des Teilbereichs des Messobjekts usw. erfolgen.

Einem Nutzer wird es somit ermöglicht, durch den Bildstapel zu "blättern" und Auswirkungen der Variationen zu beobachten. Beispielsweise kann bei einer bestimmten vorgegebenen virtuellen Beleuchtung nun entlang der optischen Achse des Objektivs geblättert und der erfasste Teilbereich des Messobjekts oder das Messobjekt als Ganzes in verschiedenen Ebenen betrachtet werden. Auch wird auf diese Weise eine, insbesondere automatische, Beurteilung der Aufnahmen hinsichtlich der Verwendbarkeit für eine Messung ermöglicht. Der Nutzer kann so nicht nur die gewünschte Parameterzusammensetzung, beispielsweise die Lage der Fokusebene bei der realen Messung, auswählen, sondern ggf. auch die Einstellungen für die virtuelle Beleuchtung oder die Größe des erfassten Teilbereichs so lange abändern oder automatisch abändern lassen, bis die Qualität des simulierten virtuellen Bildes ausreichend erscheint. Hinsichtlich der Qualität der Bildaufnahme wird es so insbesondere möglich ggf. vorhandene unterschiedliche Konvergenzbereiche einer Optimierung der Qualität der Bildaufnahme zu identifizieren. Die der Berechnung zugrunde liegenden Einstellungen können dann in das reale Koordinatenmessgerät übernommen werden und auf dieser Basis die reale Messung durchgeführt werden. Auf diese Weise wird somit ermöglicht, ein zeitaufwendiges und von der Erfahrung und Fähigkeit des Benutzers abhängige Einstellungsverfahren am realen Koordinatenmessgerät zu vermeiden.

"Einpassen" bedeutet das Einordnen des realen Bildes aufgrund seiner Bildaufnahmeeinstellung in die Abfolge von virtuellen Bildern. Beispielsweise ein reales Bild mit Fokus z₁ + 10 mm würde etwa zwischen zwei virtuelle Bilder mit z₂ = + 9 mm und z₃ = 11 mm einsortiert.Auf diese Weise wird es ebenfalls möglich, die Qualität der Berechnungen während des Schritts des Renderns zu verbessern. Das reale Bild kann wie bereits voranstehend beschrieben in den Bildstapel anhand einer Korrelation mit den virtuellen Bildern des Bildstapels eingepasst werden. Das virtuelle Bild, mit dem die beste Übereinstimmung im Rahmen der Korrelation besteht, wird dann mit dem tatsächlichen Bild verglichen. Abweichungen zwischen dem realen und dem virtuellen Bild können auf diese Weise ermittelt und beispielsweise zur Verbesserung des Schritts des Renderns, sofern er ein weiteres Mal ausgeführt wird, herangezogen werden. Des Weiteren wird es möglich, die Abweichungen auch auf die virtuellen Bilder zur Verbesserung anzuwenden.

Gemäß einem zweiten Aspekt der Erfindung wird ein Verfahren zur Optimierung einer Bildaufnahme eines Messobjekts in einem Koordinatenmessgerät mit einem optischen Sensor bereitgestellt, mit den folgenden Schritten:
- Bereitstellen eines ersten Datensatzes, der ein Modell des Messobjekts repräsentiert, eines zweiten Datensatzes, der ein Modell einer Beleuchtung des Messobjekts repräsentiert, und eines dritten Datensatzes, der ein Modell einer Optik des optischen Sensors repräsentiert,
- Simulieren einer Bildaufnahme mindestens eines auf den optischen Sensor abgebildeten virtuellen Bildes des Messobjekts durch Rendern basierend auf dem ersten Datensatz, dem zweiten Datensatz und dem dritte Datensatz, wobei der Schritt des Simulierens der Bildaufnahme des mindestens einen auf den optischen Sensor abgebildeten virtuellen Bildes des Messobjekts ein Verfahren gemäß dem ersten Aspekt oder einer seiner Ausgestaltungen ist, und
- Einstellen der Bildaufnahme des Messobjekts basierend auf dem mindestens einen simulierten virtuellen Bild des Messobjekts.

In dem Verfahren gemäß dem zweiten Aspekt der Erfindung erfolgt somit zunächst ein Bereitstellen eines ersten, eines zweiten und eines dritten Datensatzes, wobei der Schritt des Bereitstellens dem des Verfahrens gemäß dem ersten Aspekt entspricht. Auch hier kann zusätzlich der voranstehend beschriebene vierte Datensatz bereitgestellt werden. Dann erfolgt ebenfalls ein Simulieren einer Bildaufnahme durch Rendern. In diesem Fall wird mindestens ein auf dem optischen Sensor abgebildetes virtuelles Bild berechnet. Der Nutzer kann dieses betrachten oder einer automatisierten Auswertung unterziehen und darauf aufbauend kann eine Beleuchtung des Messobjekts eingestellt bzw. variiert werden. Auf diese Weise wird es möglich, ohne Einstellungen an dem realen Koordinatenmessgerät vornehmen zu müssen, eine Einstellung einer Beleuchtung an dem Koordinatenmessgerät zeiteffizienter und ohne notwendige Erfahrungen im Umgang mit Koordinatenmessgeräten vornehmen zu können.

Gemäß einem dritten Aspekt der Erfindung wird ein Koordinatenmessgerät gemäß Anspruch 10 zum Inspizieren eines Messobjekts mit einem optischen Sensor und mit einer Datenverarbeitungseinrichtung zum Steuern des Koordinatenmessgeräts bereitgestellt, wobei die Datenverarbeitungseinrichtung derart eingerichtet ist, dass sie ein Verfahren gemäß dem ersten Aspekt der Erfindung oder einer seiner Ausgestaltungen oder gemäß dem zweiten Aspekt der Erfindung oder einer seiner Ausgestaltungen ausführt.

Gemäß einem vierten Aspekt der Erfindung wird des Weiteren ein Computerprogrammprodukt gemäß Anspruch 11 mit Programmcode bereitgestellt, der ein Verfahren gemäß dem ersten Aspekt der Erfindung oder einer seiner Ausgestaltungen oder gemäß dem zweiten Aspekt der Erfindung oder einer seiner Ausgestaltungen durchführt, wenn er auf einer Datenverarbeitungseinrichtung ausgeführt wird, insbesondere einer Datenverarbeitungseinrichtung eines Koordinatenmessgeräts.

Das Koordinatenmessgerät gemäß dem dritten Aspekt und das Computerprogrammprodukt gemäß dem vierten Aspekt weisen daher dieselben Vorteile wie das Verfahren gemäß dem ersten Aspekt der Erfindung oder das Verfahren gemäß dem zweiten Aspekt der Erfindung auf.

Die eingangs gestellte Aufgabe wird daher vollkommen gelöst.

In einer Ausgestaltung des Verfahrens gemäß dem ersten Aspekt werden des Weiteren die folgenden Schritte durchgeführt:
- Bestimmen eines eine Qualität der Bildaufnahme repräsentierenden Parameters in jedem virtuellen Bild des Bildstapels,
- Ermitteln des virtuellen Bildes, bei dem der die Qualität der Bildaufnahme repräsentierende Parameter ein Optimum einnimmt, und
- Festlegen des der Bildaufnahme dieses virtuellen Bildes zugrundeliegenden zweiten und/oder dritten Datensatzes als beste Bildaufnahmeeinstellung.

Folglich wird also zunächst ein die Qualität der Bildaufnahmerepräsentierender Parameter in jedem virtuellen Bild des Bildstapels bestimmt. Dieser Parameter kann beispielsweise die Fokussierung, die Helligkeit und/oder der Kontrast sein, es kann aber grundsätzlich ein beliebiger Parameter hierfür gebildet werden, insbesondere in Form einer im Bereich der Optimierung bekannten "merit function". Hierbei kann es sich um einen Ausgabewert eines üblichen Verfahrens zur Beurteilung einer Bildaufnahme handeln. Im Falle einer Fokussierung als Parameter der Qualität kann beispielsweise eine senkrecht zu einer zu beobachtenden Kante verlaufende Linie gewählt und ein Helligkeitsgradient entlang dieser Linie bestimmt werden. Das Bild, das dann den Extremwert des Helligkeitsgradienten entlang dieser Linie beinhaltet, kann dann als Bild mit der besten Fokuseinstellung bewertet werden.

Auf diese Weise ist es dann möglich, das virtuelle Bild mit einem Optimum für den die Qualität der Bildaufnahmerepräsentierenden Parameter zu ermitteln. Dann kann die Fokuseinstellung für dieses virtuelle Bild als beste Bildaufnahmeeinstellung festgelegt werden. Auf diese Weise kann beispielsweise mittels des Verfahrens zur Simulation einer Abbildung rein auf rechnerischem Wege eine Optimierung der Bildaufnahme vorgenommen werden.

In einer weiteren Ausgestaltung des Verfahrens kann dann der folgende Schritt ausgeführt werden:
Anwenden der besten Bildaufnahmeeinstellung zumindest auf die Optik und/oder die Beleuchtung des Koordinatenmessgeräts.

Auf diese Weise kann der Nutzer dann die ausgegebenen Einstellungen auf das reale Koordinatenmessgerät anwenden und so unmittelbar die Messung mit einer besten Bildaufnahmeeinstellung durchführen.

In einer weiteren Ausgestaltung des Verfahrens gemäß dem ersten Aspekt kann vorgesehen sein, dass mit dem optischen Sensor ein reales Bild des Messobjekts aufgenommen wird, und eine Bildaufnahmeeinstellung der Optik und/oder der Beleuchtung des Koordinatenmessgeräts ausgehend von einer Bildaufnahmeeinstellung des realen Bildes zu der besten Bildaufnahmeeinstellung erfolgt.

Auf diese Weise kann implementiert werden, dass auch die letztendliche Einstellung bzw. das Anwenden der ermittelten Einstellung für die beste Bildaufnahmeebene direkt automatisiert auf dem Koordinatenmessgerät vorgenommen wird. Beispielsweise kann, wie im Folgenden erläutert wird, die dem realen Bild zugrunde liegende Bildaufnahmeeinstellung durch Vergleich des realen Bildes mit den Bildern des gerenderten Bildstapels ermittelt und dann automatisiert ausgehend von dieser Einstellung die Einstellung für die beste Bildaufnahmeebene vorgenommen werden. Selbstverständlich sind auch andere Möglichkeiten denkbar. Beispielsweise ist es auch möglich, in dem Messbereich des optischen Sensors ein Referenzobjekt anzuordnen, aus dessen Abbildung auf den optischen Sensor eine Aussage über die Lage der Bildaufnahmeebene möglich ist.

Des Weiteren können in einer Ausgestaltung des Verfahrens gemäß dem ersten Aspekt der Erfindung vorgesehen sein, dass vor dem Schritt des Renderns mit dem optischen Sensor mindestens ein reales Bild des Messobjekts aufgenommen und als Stützstelle für den Schritt des Renderns verwendet wird.

Auf diese Weise ist es möglich, in dem Schritt des Renderns eine verbesserte Simulation der Abbildung auf den optischen Sensor herbeizuführen, indem beispielsweise tatsächliche Werte für ein bestimmtes Bild vorgegeben werden können, auf Basis derer dann die Berechnung erfolgen kann.

Gemäß einer weiteren Ausgestaltung des Verfahrens nach dem ersten Aspekt der Erfindung kann vorgesehen sein, dass die Bildaufnahmeeinstellung jedes realen Bildes vorbekannt ist.

Beispielsweise kann vorgesehen sein, dass diese Bildaufnahmeeinstellung anhand der Lage des Objektivs des optischen Sensors und/oder der Anordnung der optischen Elemente des Objektivs bzw. der Optik des optischen Sensors hinterlegt ist. Auf diese Weise ist die Bildaufnahmeeinstellung auf jedes reale Bild des Koordinatenmessgeräts bei dessen Aufnahme bekannt und kann diesem Bild zugeordnet werden, so dass sie bei der weiteren Verwendung vorbekannt ist.

Des Weiteren kann gemäß einer weiteren Ausgestaltung des Verfahrens gemäß dem ersten Aspekt der Erfindung vorgesehen sein, dass nach dem Schritt des Renderns jedes reale Bild durch Korrelation mit den virtuellen Bildern des Bildstapels in den Bildstapel eingepasst und daraus die Bildaufnahmeeinstellung des realen Bildes ermittelt wird.

Auf diese Weise kann auch ohne vorbekannte Bildeinstellung durch Vergleichen des realen aufgenommenen Bildes mit den virtuellen Bildern des Bildstapels über eine Korrelation, beispielsweise eine Pixel-zu-Pixel-Korrelation, eine beste Übereinstimmung gefunden und die dazugehörigen Bildaufnahmeeinstellungen des virtuellen Bilds als diejenige des realen Bildes übernommen werden.

Beispielsweise kann in einer weiteren Ausgestaltung vorgesehen sein, dass ein bestes virtuelles Bild mit der besten Bildaufnahmeeinstellung unter Berücksichtigung der Abweichungen gerendert wird.

Es ist nicht zwangsläufig, dass das aufgenommene reale Bild bereits eine beste Bildaufnahmeeinstellung aufweist. Bei dem Rendern des Bildstapels kann sich durchaus ergeben, dass ein anderes Bild mit anderer zugrunde liegender Bildaufnahmeeinstellung die beste Bildaufnahmeeinstellung aufweist. Somit können zunächst die Abweichungen zwischen dem realen und einem entsprechenden korrelierten virtuellen Bild ermittelt und dann auf das virtuelle Bild mit der besten Bildaufnahmeeinstellung angewendet werden, um ein verbessertes virtuelles Bild mit bester Bildaufnahmeeinstellung bereitzustellen. Dieses kann dann beispielsweise weiter verwendet werden, insbesondere zur Optimierung der Beleuchtungseinstellung.

In einer weiteren Ausgestaltung des Verfahrens kann vorgesehen sein, dass ein virtuelles Bild in einer Messebene, die eine Ebene mit beliebiger Bildaufnahmeeinstellung innerhalb des Bildstapels ist unter Berücksichtigung der Abweichungen gerendert wird.

Die Bildebene, in der eine Messung durchgeführt werden soll, muss nicht diejenige sein, in der die beste Bildaufnahmeeinstellung vorliegt. Dies wird zwar in der Regel der Fall sein, dies ist jedoch nicht zwangsläufig. Insofern kann auch eine beliebige andere Messebene, die eine andere Bildaufnahmeeinstellung als die beste Bildaufnahmeeinstellung aufweist, basierend auf den ermittelten Abweichungen verbessert berechnet werden.

In einer weiteren Ausgestaltung des Verfahrens kann vorgesehen sein, dass der dritte Datensatz vorab erfasste Aberrationen der Optik des optischen Sensors aufweist, die insbesondere in Form eines Zernike-Polynoms hinterlegt werden, und die Aberrationen bei dem Rendern des besten virtuellen Bildes oder des virtuellen Bildes in einer Messebene herausgerechnet werden.

Selbstverständlich ist ein Zernike-Polynom zur Beschreibung der Aberration lediglich beispielhaft zu verstehen. Auch andere Polynomial-Ansätze, Reihenentwicklungen oder Integralentwicklungen zur Beschreibung der Wellenfront-Aberrationen des Objektivs des optischen Sensors bzw. der Optik sind möglich, beispielsweise ein Chebychev-Polynom. Die Aberrationen können beispielsweise mit einem Wellenfront-Aberrometer vorab an dem realen optischen Sensor gemessen und dann aus dem besten virtuellen Bild oder dem virtuellen Bild in einer Messebene herausgerechnet werden. Selbstverständlich kann auch bei jedem anderen berechneten virtuellen Bild ein derartiges Herausrechnen der Aberrationen erfolgen.

Hierzu können beispielsweise in dem Schritt des Renderns weitere Ausgestaltungen wie das voranstehend erwähnte Phase-Retrieval Anwendung finden, um die in Form beispielsweise eines Zernike-Polynoms hinterlegten Aberrationen entsprechend herausrechnen zu können.

In einer weiteren Ausgestaltung des Verfahrens kann vorgesehen sein, dass der Bereich des Messobjekts, in dem die Mehrzahl von virtuellen Bildern gerendert wird, größer als ein Bereich des Messobjekts ist, von dem das reale Bild aufgenommen wird.

Grundsätzlich ist es somit für eine erfolgreiche Korrelation nur notwendig, dass das reale Bild mit dem berechneten virtuellen Bild eine genügend große Überlappung aufweist. Deswegen kann ein reales Bild auch ausreichend sein, um mehrere gerenderte virtuelle Bildstapel in der Berechnung abzustützen. Des Weiteren ist es beispielsweise auch möglich, bereits unter Annahme einer translatorischen Verschiebung des optischen Sensors parallel zu der Bildaufnahmeebene mehrere aneinander angrenzende virtuelle Bildstapel zu berechnen und diese dann letztendlich bei der Berechnung zu einem virtuellen Bild zusammenzufügen, das größer als ein Bereich des Messobjekts ist, von dem ein reales Bild aufgenommen wird.

Das Zusammenfügen der virtuellen Bilder bzw. der virtuellen Bildstapel kann mit an sich bekannten Methoden der Fusion von Bilddaten, wie beispielsweise das sog. "Stitching" oder anderer Methoden, durchgeführt werden.

In einer weiteren Ausgestaltung des Verfahrens gemäß dem zweiten Aspekt der Erfindung können die folgenden Schritte durchgeführt werden:
- Ermitteln der Qualität der Bildaufnahme des Messobjekts durch Bestimmen eines Werts eines die Qualität repräsentierenden Parameters aus mindestens einem von dem mindestens einen gerenderten virtuellen Bild,
- Vergleichen des Werts des Parameters mit einem Grenzwert, und
- entweder, falls der Vergleich ein negativ ist, variieren zumindest des zweiten Datensatzes und/oder des dritten Datensatzes, und wiederholen der Schritte des Simulierens, des Ermittelns und des Vergleichens,
- oder, falls der Vergleich positiv ist, verwenden des zweiten Datensatzes zur Einstellung der Bildaufnahme des Koordinatenmessgeräts.

Auf diese Weise wird es möglich, die Qualität der Bildaufnahme des Messobjekts automatisiert zu bestimmen. Der Parameter, der die Qualität der Bildaufnahme des Messobjekts repräsentiert, kann wie bereits beschrieben geeignet gewählt sein. Beispielsweise kann auch eine gemittelte Bildhelligkeit verwendet werden und/oder es kann eine besonders geringe Differenz zwischen Helligkeitsbereichen innerhalb eines Bildes gefordert werden.

Iterativ kann das Verfahren dann automatisiert arbeiten. Die Variierung des zweiten Datensatzes kann beispielsweise in Form einer Variation eines Orts und der Lage und/oder der Anzahl der Lichtquellen, ihrer Lichtintensität, ihrer Abstrahlwinkel usw. erfolgen.

In einer weiteren Ausgestaltung des Verfahrens können die folgenden Schritte vorgesehen sein:
- Ermitteln der Qualität der Bildaufnahme des Messobjekts durch Bestimmen eines Werts eines die Qualität repräsentierenden Parameters aus mindestens einem von dem mindestens einen gerenderten virtuellen Bild,
- Variieren zumindest des zweiten Datensatzes und/oder des dritten Datensatzes innerhalb eines vorbestimmten Optimierungsbereiches und wiederholen der Schritte des Simulierens und des Ermittelns,
- Verwenden desjenigen zweiten Datensatzes zur Einstellung der Bildaufnahme des Koordinatenmessgeräts, bei dem der die Qualität repräsentierende Parameter ein Optimum einnimmt.

Auf diese Weise wird dann im Gegensatz zu der vorhergehenden Ausgestaltung, die die Variation des zweiten Datensatzes bei Erfüllung eines Grenzwertkriteriums abbricht, ein bestimmter Optimierungsbereich vollständig parametrisch durchlaufen und simuliert. Für sämtliche gerenderten Bilder wird der die Qualität der Bildaufnahme repräsentierende Parameter bestimmt und dann diejenige Bildaufnahmeeinstellung ausgewählt, die zu der besten Qualität geführt haben. Ob das "Optimum" ein Maximum oder ein Minimum ist, hängt von der Art des die Qualität repräsentierenden Parameters ab. Wird beispielsweise eine Differenz zwischen Helligkeiten innerhalb eines Bildes herangezogen, wird es ein Minimum sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: ein schematisiertes Blockdiagramm eines Koordinatenmessgeräts und ein Computerprogrammprodukt,
- Fig. 2: ein schematisiertes Blockdiagramm einer Ausführungsform eines Verfahrens zum Optimieren einer Bildaufnahmeeinstellung eines Koordinatenmessgeräts,
- Fig. 3: eine weitere Ausführungsform eines Verfahrens zum Optimieren einer Bildaufnahmeeinstellung eines Koordinatenmessgeräts,
- Fig. 4: eine erste Ausführungsform eines Verfahrens zum Simulieren einer Bildaufnahmeeines Messobjekts mit einem optischen Sensor eines Koordinatenmessgeräts,
- Fig. 5: eine zweite Ausführungsform eines Verfahrens zum Simulieren einer Bildaufnahmeeines Messobjekts mit einem optischen Sensor eines Koordinatenmessgeräts,
- Fig. 6: eine dritte Ausführungsform eines Verfahrens zum Simulieren einer Bildaufnahmeeines Messobjekts mit einem optischen Sensor eines Koordinatenmessgeräts, und
- Fig. 7: eine vierte Ausführungsform eines Verfahrens zum Simulieren einer Bildaufnahmeeines Messobjekts auf einen optischen Sensor eines Koordinatenmessgeräts.

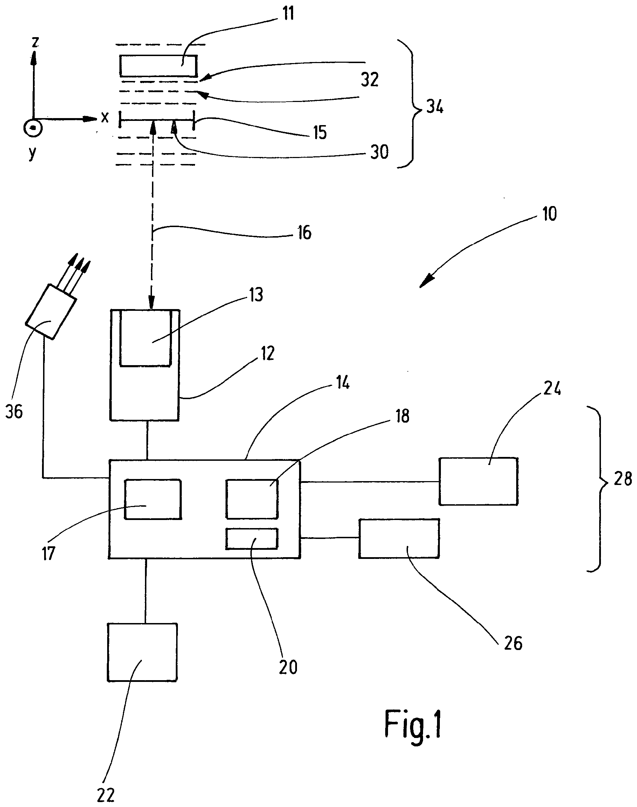

Fig. 1 zeigt ein Koordinatenmessgerät 10. Das Koordinatenmessgerät 10 dient dazu, Bildaufnahmen von einem Messobjekt 11 zu tätigen. Dazu weist die Koordinatenmessgerät 10 einen optischen Sensor 12 auf. Bei dem optischen Sensor 12 handelt es sich beispielsweise um eine Kamera, das heißt einen optischen Sensor 12, der eine flächige, das heißt zweidimensionale Aufnahme von dem Messobjekt 11 erfasst.

Die Koordinatenmessgerät 10 weist darüber hinaus ein optisches Abbildungssystem bzw. eine Optik 13 auf, das Teil des optischen Sensors 12 ist und dazu dient, das von dem Messobjekt 11 auf den optischen Sensor 12 einfallende Licht geeignet auf den optischen Sensor 12 abzubilden.

Die Koordinatenmessgerät 10 weist darüber hinaus eine Datenverarbeitungseinrichtung 14 auf, die dazu dient, das von dem optischen Sensor 12 erfasste Bild auszuwerten.

Der optische Sensor 12 weist einen Erfassungsbereich 15 auf, der sich in der in Fig. 1 schematisch dargestellten Ansicht in X-Y-Ebene erstreckt. Ein von dem optischen Sensor 12 erfasstes Bild liegt somit parallel zu der X-Y-Ebene in dem Erfassungsbereich 15. Die von dem optischen Sensor 12 scharf erfasste Bildebene oder Fokusebene ist um einen optischen Arbeitsabstand 16 von dem optischen Sensor 12 entfernt. Die Lage in Z-Richtung kann somit relativ zu dem Messobjekt 11 entweder durch Veränderung der Einstellung des optischen Abbildungssystems beeinflusst werden, so dass der optische Arbeitsabstand 16 verändert wird. Es kann aber auch bei Beibehaltung des optischen Arbeitsabstands 16 eine mechanische Bewegung des optischen Sensors 12 und des Messobjekts 11 relativ zueinander erfolgen, um die Lage des aufgenommenen Bildes relativ zum Messobjekt 11 zu beeinflussen. Dabei kann das Messobjekt 11 und/oder der optische Sensor 12 bewegt werden. Zur Beleuchtung des Messobjekts 11 weist das Koordinatenmessgerät 10 eine Beleuchtungseinrichtung 36 auf.

Die Datenverarbeitungseinrichtung 14 weist eine zentrale Datenverarbeitungseinheit 17 auf, die Rechenoperationen durchführen kann. Des Weiteren weist die Datenverarbeitungseinrichtung 14 eine Speichereinheit 18 auf, in der Bilddatensätze gespeichert werden können. Es kann ein Computerprogrammprodukt 20 installiert sein, das das nachfolgende im Detail beschriebene Verfahren auf der Datenverarbeitungseinrichtung 14 ausführt.

Darüber hinaus weist die Koordinatenmessgerät 10 eine Eingabeeinrichtung 22 auf, mittels der Nutzereingaben in die Datenverarbeitungseinrichtung 14 der Koordinatenmessgerät 10 getätigt werden können. Messwertergebnisse können mittels einer Anzeigeeinrichtung, beispielsweise einem Bildschirm, 24 und/oder mittels einer Druckereinrichtung 26 an einen Nutzer ausgegeben werden. Die Anzeigeeinrichtung 24 und/oder die Druckereinrichtung 26 bilden eine Ausgabeeinrichtung 28.

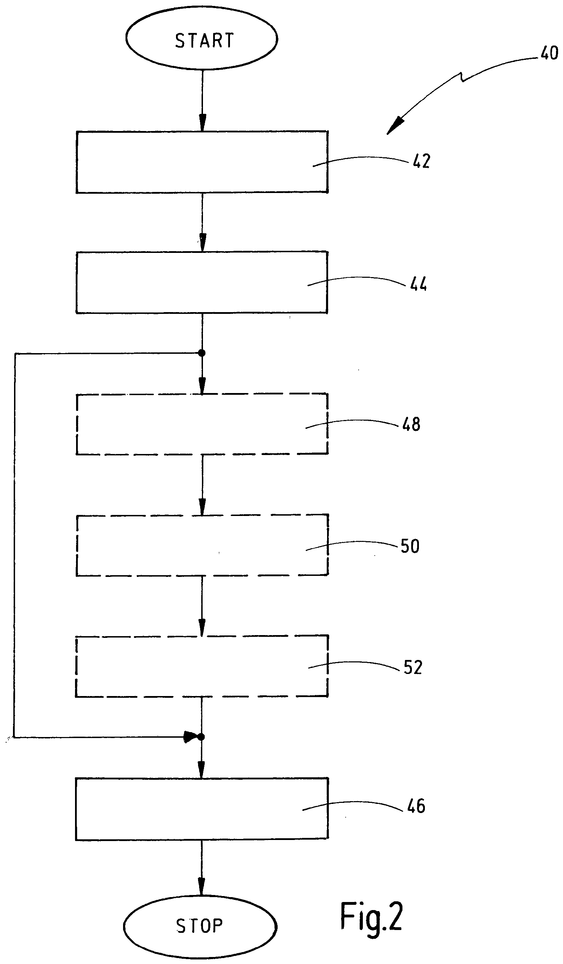

Fig. 2 zeigt eine erste Ausführungsform eines Verfahrens zur Optimierung einer Beleuchtung eines Messobjekts in einem Koordinatenmessgerät. Das Verfahren ist allgemein mit dem Bezugszeichen 40 gekennzeichnet.

Nach dem Start wird zunächst ein Schritt 42 des Bereitstellens eines ersten Datensatzes, der ein Modell des Messobjekts 11 repräsentiert, eines zweiten Datensatzes der ein Modell einer Beleuchtung 36 des Messobjekts 11 repräsentiert, und eines dritten Datensatzes, der ein Modell einer Optik 13 des optischen Sensors 12 repräsentiert, ausgeführt.

Anschließend wird ein Schritt des Simulierens 44 mindestens eines auf den optischen Sensor 12 abgebildeten virtuellen Bildes des Messobjekts 11 durch Rendern basierend auf dem ersten Datensatz, dem zweiten Datensatz und dem dritten Datensatz ausgeführt. Anschließend kann dann in einer Ausgestaltung direkt der Schritt des Einstellens 46 der Beleuchtung des Messobjekts 11 basierend auf dem mindestens einen simulierten virtuellen Bild des Messobjekts 11 durchgeführt werden.

Auf diese Weise wird das ansonsten an dem realen Messobjekt 11 mittels der realen Beleuchtungseinrichtung 36 und des realen Koordinatenmessgeräts 10 durchgeführte Einstellungsverfahren mit realer Auswertung ersetzt durch eine vollständige virtuelle Behandlung mittels eines CAD-Modells des Messobjekts, eines Modells des Koordinatenmessgeräts mit seiner Beleuchtung und eines Renderns der daraus entstehenden Abbildung auf den optischen Sensor.

Statt nach dem Schritt 44 direkt zum Schritt 46 zu gehen, kann zwischen diesen Schritten auch zunächst ein Schritt 48 des Ermittelns der Qualität der Beleuchtung des Messobjekts durch Bestimmen eines Werts eines die Qualität repräsentierenden Parameters aus mindestens einem von dem mindestens einen gerenderten virtuellen Bild ausgeführt werden. Anschließend kann dann ein Schritt 50 des Variierens des zweiten Datensatzes innerhalb eines vorbestimmten Optimierungsbereiches und Wiederholen der Schritte des Simulierens und des Ermittelns durchgeführt werden. Das Variieren des zweiten Datensatzes innerhalb eines vorbestimmten Optimierungsbereiches kann beispielsweise dergestalt erfolgen, dass Position und Ausrichtung der Beleuchtungseinrichtung 36 innerhalb bestimmter Positionsbereiche und Ausrichtungswinkelbereiche durchlaufen wird. Selbstverständlich kann es vorgesehen sein, dass mehr als eine Beleuchtungseinrichtung 36 vorgesehen ist. In diesem Fall ergeben sich weitere variierbare Parameter.

Anschließend kann dann ein Schritt 52 des Verwendens desjenigen zweiten Datensatzes zur Einstellung der Beleuchtung des Koordinatenmessgeräts durchgeführt werden, bei dem der die Qualität repräsentierende Parameter ein Optimum einnimmt.

Anschließend kann dann nach wie vor der Schritt 46 ausgeführt werden und die Einstellung der Beleuchtung des Messobjekts 11 mittels des zweiten Datensatzes erfolgen, bei dem der die Qualität repräsentierende Parameter ein Optimum einnimmt.

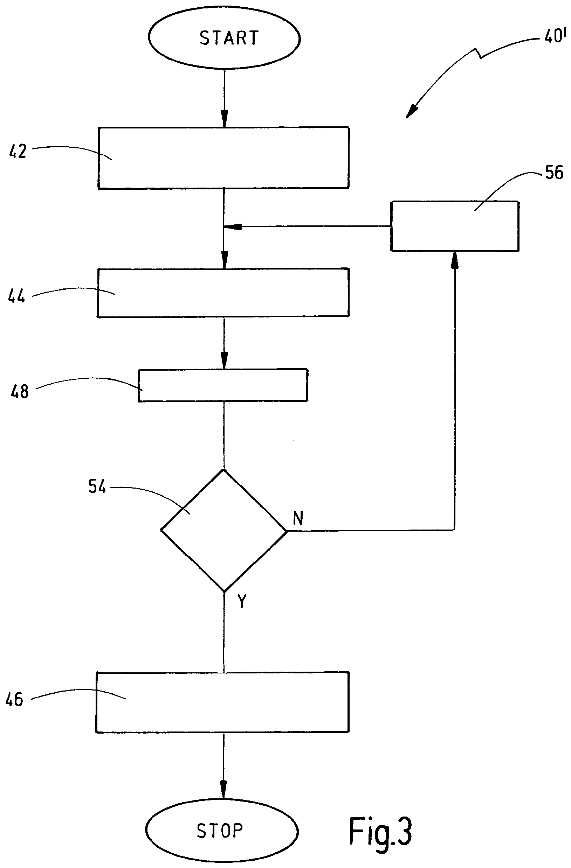

Fig. 3 zeigt eine mögliche zweite Ausführungsform des Verfahrens 40.

Zunächst werden identische Schritte 42 und 44 durchgeführt. Anschlie-ßend erfolgt in einem Schritt 48 das Ermitteln der Qualität der Beleuchtung eines Messobjekts durch Bestimmen eines Werts eines die Qualität repräsentierenden Parameters aus mindestens einem von dem mindestens einen gerenderten virtuellen Bild.

In einem Schritt 54 folgt ein Vergleich dieses Parameters mit einem Grenzwert. Ist die Abfrage negativ, wird der zweite Datensatz, d.h. die Beleuchtungseinstellung, variiert und der Schritt des Simulierens 44 und des Ermittelns 48 wiederholt. Ist die Abfrage positiv, wird anschließend mit den Einstellungen der Schritt 46 ausgeführt und die ermittelte Einstellung der Beleuchtung des Messobjekts an dem realen Koordinatenmessgerät 10 durchgeführt.

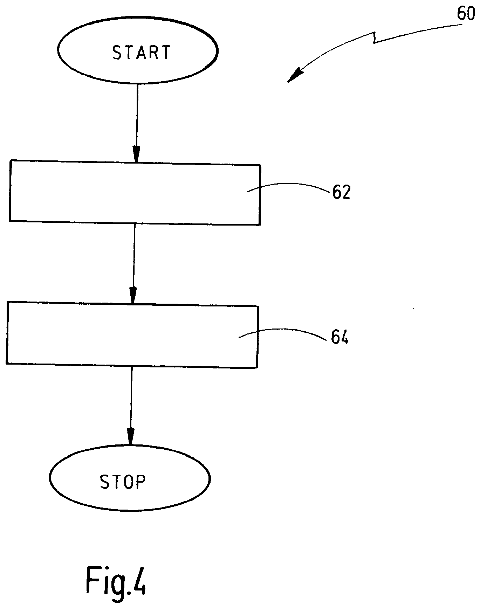

Fig. 4 zeigt eine Ausführungsform eines Verfahrens 60 zur Simulation einer Abbildung auf einem optischen Sensor eines Koordinatenmessgeräts 10 zum Inspizieren eines Messobjekts 11.

Zunächst wird ein Schritt 62 des Bereitstellens eines ersten Datensatzes, der ein Modell des Messobjekts 11 repräsentiert, eines zweiten Datensatzes, der ein Modell einer Beleuchtung 36 des Messobjekts 11 repräsentiert, und eines dritten Datensatzes, der ein Modell einer Optik 13 des optischen Sensors 12 repräsentiert, durchgeführt.

Anschließend erfolgt ein Schritt des Renderns 64 eines Bildstapels 34 basierend auf dem ersten Datensatz, dem zweiten Datensatz und dem dritten Datensatz, wobei der Bildstapel eine Mehrzahl von virtuellen Bildern zumindest eines Teilbereichs des Messobjekts 11 aufweist, wobei jedes virtuelle Bild zumindest mit einem anderen zweiten und/oder anderen dritten Datensatz gerendert ist.

Auf diese Weise wird aus bekannter vorgegebener Optik 13, bekannter vorgegebener Beleuchtung und dem CAD-Modell des Messobjekts 11 ein gesamter Bildstapel zur weiteren Verwendung simuliert. Für den Schritt des Renderns 64 kann beispielsweise eine kommerziell erhältliche 3D-Engine verwendet werden, beispielsweise eine MC-Ray tracing-based-3D-Engine. Insbesondere für die Simulation des optischen Systems kann eine Monte-Carlo-Simulation ausgeführt werden.

Gegebenenfalls kann für das Rendern in einer Ausgestaltung ein reales Bild erzeugt und in den Bildstapel 34 mittels Korrelation eingepasst werden, um auf diese Weise die Rechnung abzustützen, wie dies im Folgenden noch erläutert wird.

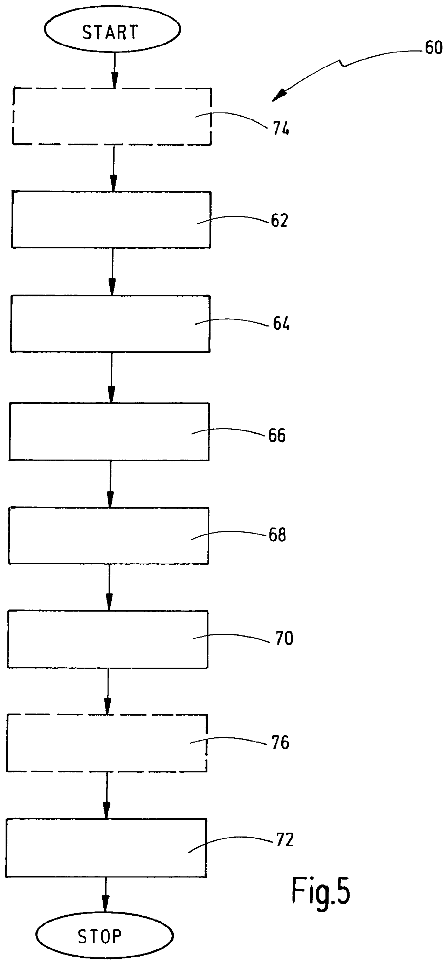

Fig. 5 zeigt eine weitere Ausgestaltung des Verfahrens 60. Hier können beispielsweise zunächst die Schritte 62 und 64 wie voranstehend beschrieben ausgeführt werden.

Dann wird in einem Schritt 66 ein eine Qualität der Bildaufnahme repräsentierender Parameter in jedem virtuellen Bild des Bildstapels 34 bestimmt. Anschlie-ßend wird in einem Schritt 68 das virtuelle Bild ermittelt, bei dem der die Qualität der Bildaufnahme repräsentierende Parameter ein Optimum einnimmt und anschließend in einem Schritt 70 die Bildaufnahmeeinstellung dieses virtuellen Bildes als beste Bildaufnahmeeinstellung festlegt. Beispielsweise kann es sich bei der Bildaufnahmeeinstellung um die Fokussierung, den Kontrast, die Helligkeit, eine Homogenität der Helligkeitsverteilung oder einen anderen Parameter handeln.

Darauf aufbauend kann dann in einem Schritt 72 die beste Bildaufnahmeeinstellung auf die Optik 13 des Koordinatenmessgeräts 10 angewendet werden. In Ausgestaltungen kann in einem Schritt 74 zu Beginn mindestens ein reales Bild des Messobjekts 11 aufgenommen und als Stützstelle für den Schritt des Renderns verwendet werden. Des Weiteren ist es in einer Ausgestaltung möglich, nach dem Schritt des Renderns 64 jedes reale Bild durch Korrelation mit den virtuellen Bildern des Bildstapels in den Bildstapel einzupassen und daraus die Bildaufnahmeeinstellung des realen Bildes ermittelt werden. Sie kann dann ggf. bei einem weiteren Durchlauf des Schritts des Renderns 64 benutzt werden, an den sich dann erneut die Schritte 66, 68, 70 und 72 anschließen. Der Schritt 76 ist jedoch lediglich notwendig, wenn nicht bereits vorab während des Schritts 74 die Bildaufnahmeeinstellungen für jedes reale Bild vorbekannt sind.

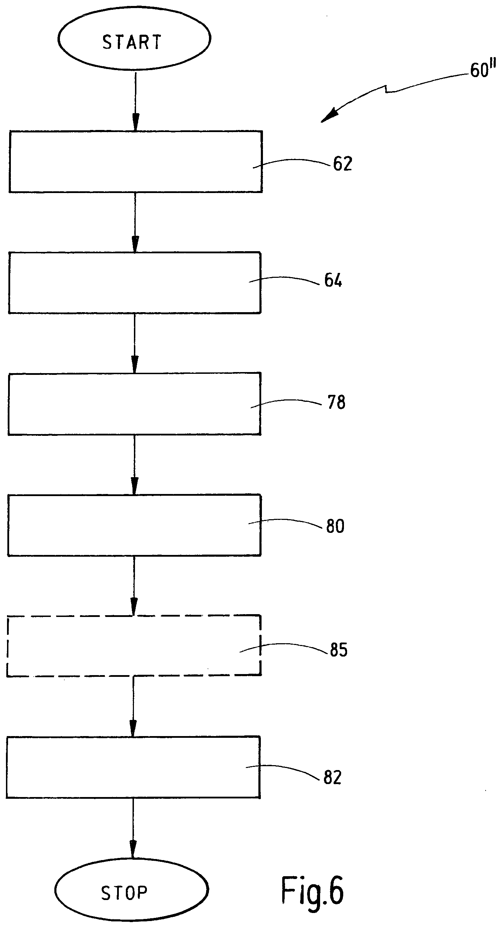

Die Fig. 6 zeigt das erfindungsgemäße Verfahren 60. Zunächst werden die Schritte 62 und 64 wie voranstehend beschrieben durchgeführt. Anschließend wird ein Schritt 78 ausgeführt, in dem mit dem optischen Sensor 22 ein reales Bild des Messobjekts aufgenommen wird, das nach dem Schritt des Renderns durch Korrelation mit den virtuellen Bildern des Bildstapels in den Bildstapel eingepasst wird. In einem anschließenden Schritt 80 werden dann Abweichungen zwischen dem realen Bild und dem entsprechenden virtuellen Bild des Bildstapels ermittelt. Dies ermöglicht es dann, in einem Schritt 82 ein bestes virtuelles Bild unter Berücksichtigung der vorab bestimmten Abweichungen zu rendern. Alternativ ist es auch möglich, in dem Schritt 82 ein anderes virtuelles Bild einer beliebigen Messebene mit beliebiger Bildaufnahmeeinstellung innerhalb des Bildstapels zu rendern.

Als Ausgestaltung ist es des Weiteren möglich, in einem Schritt 85 kumulativ zu der besten Bildaufnahmeebene weitere Ebenen innerhalb des Bildstapels zu berechnen.

Ein solches Verfahren setzt lediglich eine Kenntnis über die gewünschte Anordnung einer Ausrichtung der Beleuchtung, der Positionierung und Ausrichtung des Koordinatenmessgeräts 10 in drei translatorischen und ggf. rotatorischen Dimensionen und Kenntnis über die Optik 13 des optischen Sensors 22 voraus. Insbesondere können die geschilderten Rendervorgänge vor einer tatsächlichen Messung durchgeführt werden, was einen entsprechenden Recheneinsatz und eine hohe Genauigkeit der Berechnungen ermöglicht. Des Weiteren ist es, wie eingangs bereits geschildert, möglich, auch ein kleines reales Bild zum Abstützen des Renderns und/oder zum Einpassen in den realen Bildstapel und Ermitteln der Abweichung zu verwenden, das kleiner als das letztendlich gerenderte Bild bzw. virtuelle Gesichtsfeld ist.

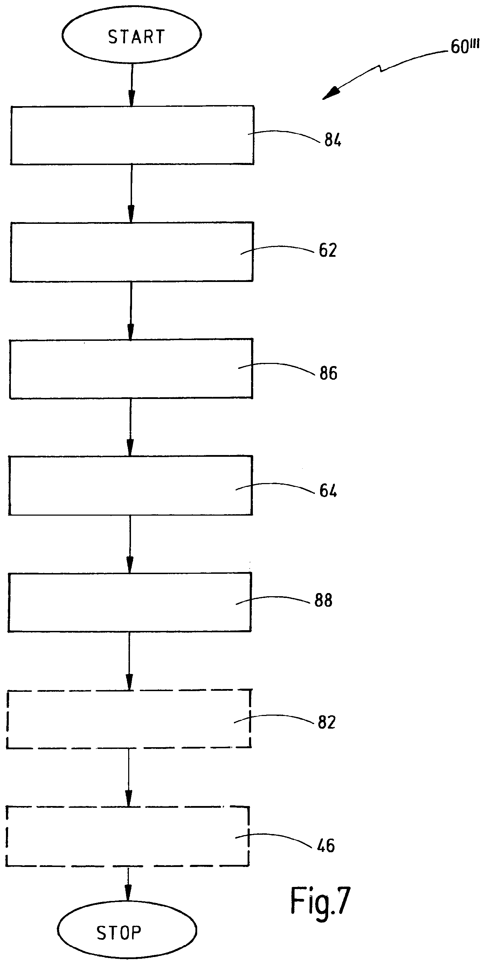

Des Weiteren zeigt die Fig. 7 eine vierte Ausführungsform des Verfahrens 60.

Zunächst wird in einem Schritt 84 über eine Messung, beispielsweise mittels eines Wellenfront-Aberrometers, die Aberration des Objektivs bzw. der Optik des Koordinatenmessgeräts bestimmt und beispielsweise in Form eines Zernike-Polynoms hinterlegt.

Damit kann der Schritt des Bereitstellens 62 wie voranstehend beschrieben erfolgen. Anschließend kann in einem Schritt 86 mindestens ein reales Bild aufgenommen werden, um den Schritt 64 des Renderns zu stützen. Ein Schritt des Renderns ist beispielsweise mit dem mindestens einen realen Bild als Startwert und einem Phase-Retrieval durchzuführen.

Darauf folgend werden in einem Schritt 88 dann das mindestens eine reale Bild in den Schritt 64 gerenderten Bildstapel eingepasst und die Aberrationen aus den entsprechenden virtuellen Bildern herausgerechnet. Zwischen dem realen und dem entsprechenden virtuellen Bild verbleibende Abweichungen können ebenfalls ermittelt und dann bei der Bestimmung des Bilds mit einer besten Bildaufnahmeeinstellung oder eines beliebigen anderen Bilds in der Messebene innerhalb des Bildstapels im Schritt 82 berücksichtigt werden.

Auf diese Weise wird es beispielsweise möglich, in einem Schritt 86 ein reales Bild in den virtuellen Bildstapel einzupassen, und seine Bildaufnahmeparameter zu bestimmen. Dieses reale Bild kann dann unter Kenntnis der Aberration des Objektivs von den Aberrationseinflüssen befreit und die verbliebenen Restabweichungen zwischen diesem realen Bild und dem virtuellen Bild ermittelt werden. Hierauf aufbauend kann dann beispielsweise in der besten Bildaufnahmeeinstellungein simuliertes Bild wiederum mit den Abweichungen in Optik-Aberrationen beaufschlagt werden, um ein möglichst reales Bild in dieser Ebene zu erzeugen. Selbstverständlich ist es auch möglich, dieses in der Bildaufnahme mit der besten Bildaufnahmeeinstellung, beispielsweise der Best-Fokus-Ebene, von den bekannten Aberrationen zu befreien und es für eine angenommene ideale Optik bzw. ein ideales Objektiv auszugeben. Dieses kann auch eine verbesserte Schärfentiefe vor bzw. hinter der Ebene der besten Bildaufnahme, beispielsweise der Best-Fokus-Ebene, liefern.

Letztlich ist es noch denkbar, die neu berechneten Bilder statt auf ideale Optik umzurechnen mit virtuellen optischen Elementen im Strahlengang zu versehen. Beispielsweise können opake bzw. teiltransparente oder diffus streuende Medien virtuell im Strahlengang angeordnet werden und das Messobjekt durch diese bzw. durch deren Grenzschichten betrachtet werden.

## Patentansprüche

1. Verfahren (60) zur Simulation einer Bildaufnahme eines optischen Sensors eines Koordinatenmessgeräts (10) zum Inspizieren eines Messobjekts (11), mit den folgenden Schritten:
- Bereitstellen (62) eines ersten Datensatzes, der ein Modell des Messobjekts (11) repräsentiert, eines zweiten Datensatzes, der ein Modell einer Beleuchtung (36) des Messobjekts (11) repräsentiert, und eines dritten Datensatzes, der ein Modell einer Optik (13) des optischen Sensors (12) repräsentiert, und
- Rendern (64) eines Bildstapels (34) basierend auf dem ersten Datensatz, dem zweiten Datensatz und dem dritten Datensatz, wobei der Bildstapel eine Mehrzahl von virtuellen Bildern zumindest eines Teilbereichs des Messobjekts (11) aufweist, wobei jedes virtuelle Bild zumindest mit einem anderen zweiten und/oder anderen dritten Datensatz gerendert ist,
**dadurch gekennzeichnet, dass** mit dem optischen Sensor ein reales Bild des Messobjekts (11) aufgenommen wird, dass nach dem Schritt des Renderns das reale Bild durch Korrelation mit den virtuellen Bildern des Bildstapels in den Bildstapel eingepasst wird (78), und dass Abweichungen zwischen dem realen Bild und einem entsprechenden virtuellen Bild des Bildstapels ermittelt werden (80).

2. Verfahren nach Anspruch 1, **gekennzeichnet durch** die folgenden Schritte:
- Bestimmen (66) eines eine Qualität der Bildaufnahme repräsentierenden Parameters in jedem virtuellen Bild des Bildstapels,
- Ermitteln (68) des virtuellen Bildes, bei dem der die Qualität der Bildaufnahme repräsentierende Parameter ein Optimum einnimmt, und
- Festlegen (70) des der Bildaufnahme dieses virtuellen Bildes zugrundeliegenden zweiten und/oder dritten Datensatzes als beste Bildaufnahmeeinstellung.

3. Verfahren nach den Ansprüchen 1 und 2, **dadurch gekennzeichnet, dass** ein bestes virtuelles Bild mit der besten Bildaufnahmeeinstellung unter Berücksichtigung der Abweichungen gerendert wird (82).

4. Verfahren nach Anspruch 3, **dadurch gekennzeichnet, dass** ein virtuelles Bild in einer Messebene, die eine Ebene mit beliebiger Bildaufnahmeeinstellung innerhalb des Bildstapels ist, unter Berücksichtigung der Abweichungen gerendert wird (82).

5. Verfahren nach einem der Ansprüche 1 bis 4, **dadurch gekennzeichnet, dass** der dritte Datensatz vorab erfasste Aberrationen der Optik (13) des optischen Sensors (12) aufweist, die insbesondere in Form eines Zernike-Polynoms hinterlegt werden, und die Aberrationen bei dem Rendern des besten virtuellen Bildes oder des virtuellen Bildes in einer Messebene herausgerechnet werden.

6. Verfahren nach einem der Ansprüche 1 bis 5, **dadurch gekennzeichnet, dass** der Bereich des Messobjekts (11), in dem die Mehrzahl von virtuellen Bildern gerendert werden, größer als ein Bereich des Messobjekts (11) ist, von dem das reale Bild aufgenommen wird.

7. Verfahren (40) zur Optimierung einer Bildaufnahme eines Messobjekts (11) in einem Koordinatenmessgerät (10) mit einem optischen Sensor, mit den folgenden Schritten:
- Bereitstellen (42) eines ersten Datensatzes, der ein Modell des Messobjekts (11) repräsentiert, eines zweiten Datensatzes, der ein Modell einer Beleuchtung des Messobjekts (11) repräsentiert, und eines dritten Datensatzes, der ein Modell einer Optik (13) des optischen Sensors (12) repräsentiert,
- Simulieren (44) einer Bildaufnahme mindestens eines auf den optischen Sensor abgebildeten virtuellen Bildes des Messobjekts (11) durch Rendern basierend auf dem ersten Datensatz, dem zweiten Datensatz und dem dritte Datensatz, wobei der Schritt des Simulierens der Bildaufnahme des mindestens einen auf den optischen Sensor abgebildeten virtuellen Bildes des Messobjekts (11) ein Verfahren (60) nach einem der Ansprüche 1 bis 6 ist, und
- Einstellen (46) der Bildaufnahme des Messobjekts (11) basierend auf dem mindestens einen simulierten virtuellen Bild des Messobjekts (11).

8. Verfahren nach Anspruch 7, **gekennzeichnet durch** die folgenden Schritte:
- Ermitteln (48) der Qualität der Bildaufnahme des Messobjekts (11) durch Bestimmen eines Werts eines die Qualität repräsentierenden Parameters aus mindestens einem von dem mindestens einen gerenderten virtuellen Bild,
- Vergleichen (54) des Werts des Parameters mit einem Grenzwert, und
- entweder, falls der Vergleich ein negativ ist, variieren (56) zumindest des zweiten Datensatzes und/oder des dritten Datensatzes, und wiederholen der Schritte des Simulierens, des Ermittelns und des Vergleichens,
- oder, falls der Vergleich positiv ist, verwenden (46) des zweiten Datensatzes zur Einstellung der Bildaufnahme des Koordinatenmessgeräts (10).

9. Verfahren nach Anspruch 7, **gekennzeichnet durch** die folgenden Schritte:
- Ermitteln (48) der Qualität der Bildaufnahme des Messobjekts (11) durch Bestimmen eines Werts eines die Qualität repräsentierenden Parameters aus mindestens einem von dem mindestens einen gerenderten virtuellen Bild,
- Variieren (50) zumindest des zweiten Datensatzes und/oder des dritten Datensatzes innerhalb eines vorbestimmten Optimierungsbereiches und wiederholen der Schritte des Simulierens und des Ermittelns,
- Verwenden (52) desjenigen zweiten Datensatzes zur Einstellung der Bildaufnahme des Koordinatenmessgeräts (10), bei dem der die Qualität repräsentierende Parameter ein Optimum einnimmt.

10. Koordinatenmessgerät (10) zum Inspizieren eines Messobjekts (11), mit einem optischen Sensor und mit einer Datenverarbeitungseinrichtung zum Steuern des Koordinatenmessgeräts (10), **dadurch gekennzeichnet, dass** die Datenverarbeitungseinrichtung derart eingerichtet ist, dass sie ein Verfahren (40, 60) nach einem der Ansprüche 1 bis 9 ausführt.

11. Computerprogrammprodukt (20) mit Programmcode, der ein Verfahren (40, 60) nach einem der Ansprüche 1 bis 9 durchführt, wenn er auf einer Datenverarbeitungseinrichtung (14) ausgeführt wird, insbesondere einer Datenverarbeitungseinrichtung (14) eines Koordinatenmessgeräts (10).

## Claims

1. Method (60) for simulating an image recording by an optical sensor of a coordinate measuring machine (10) for inspecting a measurement object (11), comprising the following steps:
- providing (62) a first data set representing a model of the measurement object (11), a second data set representing a model of an illumination (36) of the measurement object (11), and a third data set representing a model of an optical unit (13) of the optical sensor (12), and
- rendering (64) an image stack (34) on the basis of the first data set, the second data set and the third data set, wherein the image stack has a plurality of virtual images of at least one partial region of the measurement object (11), wherein each virtual image is rendered at least with a different second and/or different third data set,
**characterized in that** a real image of the measurement object (11) is recorded by the optical sensor, **in that**, after the step of rendering, the real image is fitted (78) into the image stack by correlation with the virtual images of the image stack, and **in that** deviations between the real image and a corresponding virtual image of the image stack are ascertained (80).

2. Method according to Claim 1, **characterized by** the following steps:
- determining (66) a parameter representing a quality of the image recording in each virtual image of the image stack,
- ascertaining (68) the virtual image for which the parameter representing the quality of the image recording assumes an optimum, and
- defining (70) the second and/or third data set underlying the image recording of said virtual image as the best image recording setting.

3. Method according to Claims 1 and 2, **characterized in that** a best virtual image with the best image recording setting is rendered (82) taking account of the deviations.

4. Method according to Claim 3, **characterized in that** a virtual image in a measurement plane which is a plane with an arbitrary image recording setting within the image stack is rendered (82) taking account of the deviations.

5. Method according to any of Claims 1 to 4, **characterized in that** the third data set has previously detected aberrations of the optical unit (13) of the optical sensor (12), which are stored in particular in the form of a Zernike polynomial, and the aberrations are subtracted during the rendering of the best virtual image or of the virtual image in a measurement plane.

6. Method according to any of Claims 1 to 5, **characterized in that** the region of the measurement object (11) in which the plurality of virtual images are rendered is larger than a region of the measurement object (11) from which the real image is recorded.

7. Method (40) for optimizing an image recording of a measurement object (11) in a coordinate measuring machine (10) by an optical sensor, comprising the following steps:
- providing (42) a first data set representing a model of the measurement object (11), a second data set representing a model of an illumination (36) of the measurement object (11), and a third data set representing a model of an optical unit (13) of the optical sensor (12),
- simulating (44) an image recording of at least one virtual image of the measurement object (11) imaged onto the optical sensor by rendering on the basis of the first data set, the second data set and the third data set, wherein the step of simulating the image recording of the at least one virtual image of the measurement object (11) imaged onto the optical sensor is a method (60) according to any of Claims 1 to 6, and
- setting (46) the image recording of the measurement object (11) on the basis of the at least one simulated virtual image of the measurement object (11).

8. Method according to Claim 7, **characterized by** the following steps:
- ascertaining (48) the quality of the image recording of the measurement object (11) by determining a value of a parameter representing the quality from at least one of the at least one rendered virtual image,
- comparing (54) the value of the parameter with a limit value, and
- either, if the comparison is negative, varying (56) at least the second data set and/or the third data set, and repeating the steps of simulating, ascertaining and comparing,
- or, if the comparison is positive, using (46) the second data set for setting the image recording by the coordinate measuring machine (10).

9. Method according to Claim 7, **characterized by** the following steps:
- ascertaining (48) the quality of the image recording of the measurement object (11) by determining a value of a parameter representing the quality from at least one of the at least one rendered virtual image,
- varying (50) at least the second data set and/or the third data set within a predetermined optimization range and repeating the steps of simulating and ascertaining,
- using (52) that second data set for setting the image recording by the coordinate measuring machine (10) for which the parameter representing the quality assumes an optimum.

10. Coordinate measuring machine (10) for inspecting a measurement object (11), comprising an optical sensor and comprising a data processing device for controlling the coordinate measuring machine (10), **characterized in that** the data processing device is configured in such a way that it performs a method (40, 60) according to any of Claims 1 to 9.

11. Computer program product (20) comprising program code which carries out a method (40, 60) according to any of Claims 1 to 9 when it is executed on a data processing device (14), in particular a data processing device (14) of a coordinate measuring machine (10).

## Revendications

1. Procédé (60) de simulation d'une prise de vue d'un capteur optique d'un appareil de mesure de coordonnées (10) destiné à inspecter un objet mesuré (11), comprenant les étapes suivantes :
- mise à disposition (62) d'un premier jeu de données qui représente un modèle de l'objet mesuré (11), d'un deuxième jeu de données qui représente un modèle d'un éclairage (36) de l'objet mesuré (11), et d'un troisième jeu de données qui représente un modèle d'une optique (13) du capteur optique (12), et
- rendu (64) d'une pile d'images (34) en se basant sur le premier jeu de données, le deuxième jeu de données et le troisième jeu de données, la pile d'images possédant une pluralité d'images virtuelles d'au moins une zone partielle de l'objet mesuré (11), chaque image virtuelle étant rendue au moins avec un autre deuxième et/ou un autre troisième jeu de données,
**caractérisé en ce qu'**une image réelle de l'objet mesuré (11) est enregistrée avec le capteur optique, **en ce qu'**après l'étape de rendu, l'image réelle est ajustée dans la pile d'images par corrélation avec les images virtuelles de la pile d'images (78), et en ce les écarts entre l'image réelle et une image virtuelle correspondante de la pile d'images sont déterminés (80).

2. Procédé selon la revendication 1, **caractérisé par** les étapes suivantes :
- établissement (66) d'un paramètre représentant une qualité de la prise de vue dans chaque image virtuelle de la pile d'images,
- détermination (68) de l'image virtuelle pour laquelle le paramètre qui représente la qualité de la prise de vue adopte un optimum, et
- adoption (70) du deuxième et/ou du troisième jeu de données sur lequel s'appuie la prise de vue de cette image virtuelle en tant que meilleur réglage de prise de vue.

3. Procédé selon l'une des revendications 1 et 2, **caractérisé en ce qu'**une meilleure image virtuelle avec le meilleur réglage de prise de vue est rendue en tenant compte des écarts (82).

4. Procédé selon la revendication 3, **caractérisé en ce qu'**une image virtuelle dans un plan de mesure, lequel est un plan avec un réglage de prise de vue quelconque à l'intérieur de la pile d'images, est rendue en tenant compte des écarts (82).

5. Procédé selon l'une des revendications 1 à 4, **caractérisé en ce que** le troisième jeu de données possède des aberrations détectées préalablement de l'optique (13) du capteur optique (12), lesquelles sont notamment enregistrées sous la forme d'un polynôme de Zernike, et les aberrations lors du rendu de la meilleure image virtuelle ou de l'image virtuelle sont éliminées par calcul dans un plan de mesure.

6. Procédé selon l'une des revendications 1 et 5, **caractérisé en ce que** la zone de l'objet mesuré (11) dans laquelle sont rendues la pluralité d'images virtuelles est plus grande qu'une zone de l'objet mesuré (11) de laquelle est enregistrée la première image réelle.

7. Procédé (40) d'optimisation d'une prise de vue d'un objet mesuré (11) dans un appareil de mesure de coordonnées (10) pourvu d'un capteur optique, comprenant les étapes suivantes :
- mise à disposition (42) d'un premier jeu de données qui représente un modèle de l'objet mesuré (11), d'un deuxième jeu de données qui représente un modèle d'un éclairage de l'objet mesuré (11), et d'un troisième jeu de données qui représente un modèle d'une optique (13) du capteur optique (12),
- simulation (44) d'une prise de vue d'au moins une image virtuelle de l'objet mesuré (11) représentée sur le capteur optique par rendu en se basant sur le premier jeu de données, le deuxième jeu de données et le troisième jeu de données, l'étape de simulation de la prise de vue de l'au moins une image virtuelle de l'objet mesuré (11) représentée sur le capteur optique étant un procédé (60) selon l'une des revendications 1 à 6, et
- réglage (46) de la prise de vue de l'objet mesuré (11) en se basant sur l'au moins une image virtuelle simulée de l'objet mesuré (11).

8. Procédé selon la revendication 7, **caractérisé par** les étapes suivantes :
- détermination (48) de la qualité de la prise de vue de l'objet mesuré (11) par établissement d'une valeur d'un paramètre qui représente la qualité à partir d'au moins une parmi l'au moins une image virtuelle rendue,
- comparaison (54) de la valeur du paramètre avec une valeur limite, et
- soit, si la comparaison est négative, variation (56) au moins du deuxième jeu de données et/ou du troisième jeu de données, et répétition des étapes de simulation, de détermination et de comparaison,
- soit, si la comparaison est positive, utilisation (46) du deuxième jeu de données pour régler la prise de vue de l'appareil de mesure de coordonnées (10).

9. Procédé selon la revendication 7, **caractérisé par** les étapes suivantes :
- détermination (48) de la qualité de la prise de vue de l'objet mesuré (11) par établissement d'une valeur d'un paramètre qui représente la qualité à partir d'au moins une parmi l'au moins une image virtuelle rendue,
- variation (50) au moins du deuxième jeu de données et/ou du troisième jeu de données à l'intérieur d'une plage d'optimisation prédéfinie et répétition des étapes de simulation et de détermination,
- utilisation (52), pour régler la prise de vue de l'appareil de mesure de coordonnées (10), du deuxième jeu de données pour lequel le paramètre qui représente la qualité adopte un optimum.

10. Appareil de mesure de coordonnées (10) destiné à inspecter un objet mesuré (11), comprenant un capteur optique et un dispositif de traitement de données destiné à commander l'appareil de mesure de coordonnées (10), **caractérisé en ce que** le dispositif de traitement de données est conçu de telle sorte qu'il met en oeuvre un procédé (40, 60) selon l'une des revendications 1 à 9.

11. Produit de programme informatique (20) comprenant un code de programme qui met en oeuvre un procédé (40, 60) selon l'une des revendications 1 à 9 lorsqu'il est exécuté sur un dispositif de traitement de données (14), notamment un dispositif de traitement de données (14) d'un appareil de mesure de coordonnées (10).
